# EUROPEAN PATENT APPLICATION

(11) **EP 2 037 683 A1**
(43) Date of publication of application: **18.03.2009**
(21) Application number: 07291107.6
(22) Date of filing: 17.09.2007
(51) Int. Cl.: H04N 7/24

(54) **Process for delivering to a media terminal an adapted video stream by means of an access node**

(71) Applicant: Alcatel Lucent, 75008 Paris (FR)
(72) Inventor: Vandaele, Piet, 9000 Gent (BE)
(74) Representative: Sayettat, Julien Christian

(57) **Abstract**

Process for delivering a video stream to a media terminal (5) amongst several media terminals connected to an access node of a network, said stream being encoded by using scalable codec technology for integrating a scalable codec base layer (1) and enhancement layers (2, 3, 4), wherein the access node selects amongst the enhancement layers (2, 3, 4) of the stream the base layer and the enhancement layer(s) according to the display capabilities of the media terminal (5), said selection being made on the basis of prior knowledge of the access node or by means of the subscription of the media terminal to the appropriate multicast channel, the access node then sending to the media terminal (5) the stream integrating the base layer (1) and the selected enhancement layer(s) (2, 3, 4).

## Description

The invention relates to a process for delivering a video stream to a media terminal amongst several media terminals connected to an access node of a network, and an access node for a network delivering video streams.

IPTV is an emerging system in which the number of offered broadcast channels keeps on increasing. Not only the number of different channels increases, but also the format (standard definition, high definition, CIF, VGA) in which they are offered increases. In the current state-of-the art the broadcast channels are offered over a multicast tree, one per each format of each channel (a technique often referred to as simulcast). By using scalable codec technology, the multitude of different formats for each channel can be embedded in one multilayered video flow. By that mean, the media terminals can in accordance with their display capabilities select those layers of the video flow that they are able to interpret.

In a system using scalable coding, the layers of the multicast video streams are:
- a base layer comprising the basic information concerning the broadcast video, i.e. the video in its lowest spatial and temporal resolution and in its lowest colour accuracy,
- said basic layer can be complemented by one or more enhancement layers which allow this base layer associated with the base layer to be upgraded to a higher spatial or temporal resolution or to a higher colour accuracy.

As the number of types of terminals increases, a large number of the different formats for each video channel are routed through the network in order to fulfil the needs of the different media terminals receiving the streams. If no scalable codec technology is used, potentially different formats of the same broadcast channels have to be supported on the network in simulcast, each format having a different temporal or spatial resolution or its own colour definition in order to comply with the needs of the different media terminals.

Those numerous scalable codec multicast streams are in simulcast and lead to an increase in bandwidth consumption on the network as well as on the access node uplinks of the network.

The purpose of the invention is to resolve the problem of the prior art by proposing, in particular, a process for delivering a scalable codec multicast video stream to a media terminal via an access node, said access node selecting on request of the terminal the enhancement layers in accordance with the display capabilities of the media terminal.

Such a process enables to reduce bandwidth consumption: the access node, which has the requirement to support the video stream in all possible spatial and temporal resolutions and colour accuracies, reduces the video stream to its adapted contents.

For that purpose and according to a first aspect, the invention relates to a process for delivering a video stream to a media terminal amongst several media terminals connected to an access node of a network, said stream being encoded by using scalable codec technology for integrating a scalable codec base layer and enhancement layers, wherein the access node selects amongst the enhancement layers of the stream the base layer and the enhancement layer(s) according to the display capabilities of the media terminal, and sends to the media terminal the stream integrating the base layer and the selected enhancement layer(s).

According to a second aspect, the invention relates to an access node for a network delivering video streams encoded by using scalable codec technology for integrating a scalable codec base layer and enhancement layers, said access node being able to replicate this stream to different subscriber ports to each of which respectively a media terminal is connected, said access node comprising means for selecting the adapted enhancement layer(s) for each media terminal in order to send to the media terminal the stream integrating the base layer and the selected enhancement layer(s).

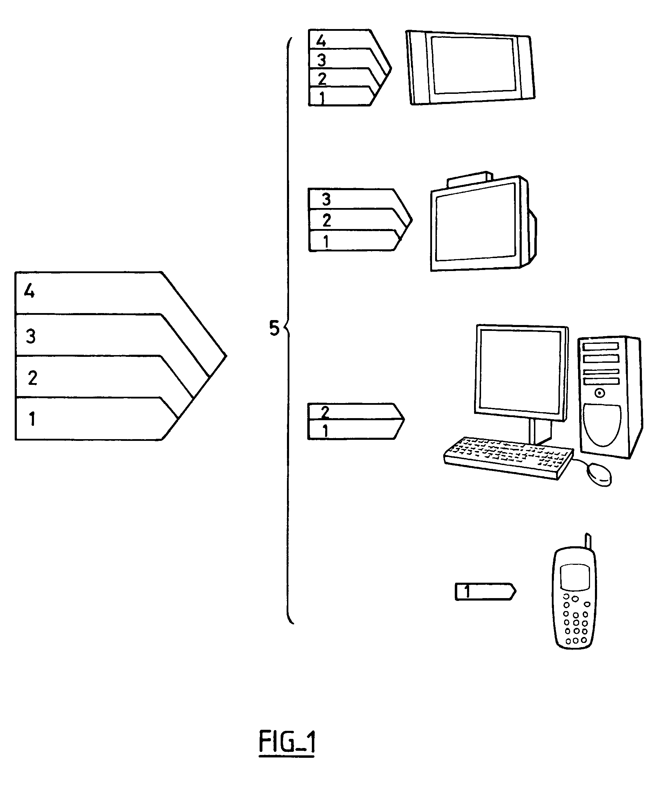

Other aspects and advantages will become apparent in the following description made with reference to the appended figure that illustrates the carrying out of the process according to an embodiment of the invention.

The invention here described concerns video streams which are delivered through an IPTV network and are encoded by using scalable codec technology for integrating a scalable codec base layer 1 and enhancement layers 2, 3, 4.

Indeed, scalable codecs encode video contents according to a layered system consisting of a base layer 1 and one or more enhancement layers 2, 3, 4.

Through the network, different versions of video streams are broadcast in order to comply with the different existing media terminals 5. Therefore, each video stream might be broadcast in HDTV, SDTV, a format for PC, a format for PDA or in CIF.

In the layered system of video streams, the base layer 1 comprises the video information concerning the broadcast video in its lowest temporal and spatial resolution and it lowest colour accuracy. The enhancement layers 2, 3 and 4 contain information to upgrade the video to either a higher spatial and/or temporal resolution and/or colour accuracy.

In particular, those enhancement layers concern:
- temporal information for the video stream to be adapted to a higher refresh rates (from, e.g., 15 Hz to 50 Hz and higher using one of more temporal resolution enhancement layers),
- spatial information corresponding to resolution of the video stream (e.g. from 176 pixels/line x 144 lines/image in the base layer to 1920 pixels/line x 1080 lines/image over 1280 pixels/line x 720 lines/image, using one or more spatial resolution enhancement layers),
- SNR (Signal to Noise Ratio) information, i.e. quality information corresponding to colour spaces compliant with the media terminals (from monochrome screens to 24-bit-plane monitors using one or more color accuracy enhancement layers).

Thus, the scalable codec enhancement layers 2, 3, 4, define the spatial and temporal resolution and the colour accuracy of the video stream. More precisely, the enhancement layers 2, 3, 4, allow to upgrade the video associated with the base layer 1 to a (higher quality) video that can be displayed on the media terminal 5.

When a media terminal 5 requests to receive a video, the video stream is delivered in layers via a set of multicast streams over the network to the access node. Indeed, the layered stream is delivered via a set of multicast streams, each layer being delivered in a different multicast stream over the network.

The access node receives from the network all layers to decode the video stream in accordance with the display capabilities of all the media terminals (5) that are connected to the said access node, in particular the high resolution video stream.

This process applies to requests for videos coming from all media terminals 5 whatever their type (e.g. televisions, computers or mobile phones).

The base layer together with all enhancement layers 2, 3, 4, allow to decode the video in all possible spatial and temporal resolution an colour accuracies that each terminal 5 could ask for according to its display capabilities.

The layered video stream is delivered to an access node of the network. In the present invention, extra intelligence is embedded in the access node. By means of that increased intelligence, in one embodiment, the access node has prior knowledge of which enhancement layers 2, 3, 4, are adapted for the media terminal 5.

The access node sends the base layer and selects amongst the enhancement layers 2, 3, 4, of the stream those adapted to the media terminal 5 as regards refresh rates, pixel array and supported colour spaces.

The access node is able to replicate the video stream to different subscriber ports to each of which respectively a media terminal 5 is connected. Therefore, the access node comprising those means coming from its embedded extra intelligence sends to the media terminal 5 the stream integrating the base layer 1 an the selected enhancement layer(s) 2, 3, 4.

In a second embodiment, the layers are sent in one multicast stream in which each layer is identified by a different multicast source address. The media terminal 5 signals its capabilities via source-specific IGMP signalling.

In that embodiment, the media terminal 5 subscribes beforehand to the base layer 1 as well as to the enhancement layers 2, 3, 4, corresponding to its display capabilities. To do so, the media terminal signals its capabilities by means of a subscription to the appropriate multicast stream.

Consequently, based on this subscription information given by the media terminal 5, the access node sends the appropriate layers (base layer and suitable enhancement layers) to the media terminal 5.

In a third embodiment, the multicast streams are sent to the access node with the base layer 1 and enhancement layers 2, 3, 4, all having a different IP source address. The media terminal 5 subscribes to the appropriate multicast flows by sending source specific multicast messages to the access node.

When the access node receives the request coming from the media terminal 5 about the source of the base layer 1 and enhancement layers 2, 3, 4, that the said media terminal 5 wishes to receive, it replicates the multicast flow with the source address specified in the request of the media terminal 5.

That way, the access node receives the necessary knowledge in order to directly select the base layer 1 and enhancement layers 2, 3, 4, requested by the media terminal 5 and corresponding to its display capabilities.

The access node then sends to the media terminal 5 the stream integrating the base layer 1 and the selected enhancement layer(s) 2, 3, 4.

## Claims

1. Process for delivering a video stream to a media terminal (5) amongst several media terminals connected to an access node of a network, said stream being encoded by using scalable codec technology for integrating a scalable codec base layer (1) and enhancement layers (2, 3, 4), wherein the access node selects amongst the enhancement layers (2, 3, 4) of the stream the base layer and the enhancement layer(s) according to the display capabilities of the media terminal (5), and sends to the media terminal (5) the stream integrating the base layer (1) and the selected enhancement layer(s) (2, 3, 4).

2. Process of claim 1, **characterized in that** the access node receives from the network all layers to decode the video stream in accordance with the display capabilities of all the media terminals (5) that are connected to the said access node, in particular the high resolution video stream.

3. Process of claim 1 or 2, **characterized in that** the video stream is delivered through an IPTV network.

4. Process of any of claims 1 to 3, **characterized in that** the scalable codec enhancement layers (2, 3, 4) define the spatial and temporal resolution and the colour accuracy of the video stream.

5. Process of any of claims 1 to 4, **characterized in that** the access node has prior knowledge of which enhancement layers (2, 3, 4) are adapted for the media terminal (5).

6. Process of any of claims 1 to 5, **characterized in that** the stream is delivered via a set of multicast streams, each layer of said stream being delivered in a different multicast stream over the network, the terminal signalling its capabilities by means of a subscription to the appropriate multicast stream.

7. Process of claim 1 to 5, **characterized in that** the layers are sent in one multicast stream in which each layer is identified by a different multicast source address, the terminal signalling its capabilities via source-specific IGMP signalling.

8. Access node for a network delivering video streams encoded by using scalable codec technology for integrating a scalable codec base layer (1) and enhancement layers (2, 3, 4), said access node being able to replicate this stream to different subscriber ports to each of which respectively a media terminal (5) is connected, said access node comprising means for selecting the adapted enhancement layer(s) (2, 3, 4) for each media terminal (5) in order to send to the media terminal (5) the stream integrating the base layer (1) and the selected enhancement layer(s) (2, 3, 4).
